# EUROPÄISCHE PATENTSCHRIFT

(11) **EP 2 836 328 B1**
(45) Veröffentlichungstag und Bekanntmachung des Hinweises auf die Patenterteilung: **19.07.2017**
(21) Anmeldenummer: 13707137.9
(22) Anmeldetag: 20.02.2013
(51) Int. Cl.: B23D 51/10

(54) **WERKZEUGMASCHINENSPANNVORRICHTUNG**
POWER TOOL CLAMPING DEVICE
DISPOSITIF DE SERRAGE POUR MACHINE-OUTIL

(30) Priorität: 13.04.2012 DE 102012206036
(43) Veröffentlichungstag der Anmeldung: 18.02.2015
(73) Patentinhaber: Robert Bosch GmbH, 70442 Stuttgart (DE)
(72) Erfinder: FRAGAPANE, Guiseppe, CH-4500 Solothurn (CH)
(86) Internationale Anmeldenummer: PCT/EP2013/053300
(87) Internationale Veröffentlichungsnummer: WO 2013/152888

(56) Entgegenhaltungen:
- FR-A1- 2 257 376
- JP-A- H07 266 129
- US-A- 2 087 018
- US-A- 5 903 983

## Beschreibung

### Stand der Technik

Es sind bereits Werkzeugmaschinenspannvorrichtungen, insbesondere Oszillationswerkzeugmaschinenspannvorrichtungen, bekannt, die die Merkmale des Oberbegriffs des Anspruchs 1 aufweisen. Eine solche Werkzeugmaschinenspannvorrichtung ist aus US 2 087 018 A bekannt.

### Offenbarung der Erfindung

Die Erfindung wird durch die Merkmale des Anspruchs 1 realisiert. Es wird vorgeschlagen, dass das Betätigungselement entlang zumindest zwei zumindest im Wesentlichen quer zueinander verlaufenden Bewegungsrichtungen des Betätigungselements relativ zum Kraftschlussspannebenenelement beweglich gelagert ist. Der Ausdruck "beweglich gelagert" soll hier insbesondere eine Lagerung eines Elements relativ zu zumindest einem weiteren Element definieren, wobei das Element, insbesondere entkoppelt von einer elastischen Verformung des Elements und entkoppelt von bedingt durch ein Lagerspiel hervorgerufene Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist. Unter einer "Spanneinheit" soll hier insbesondere eine Einheit verstanden werden, die ein Bearbeitungswerkzeug mittels eines Formschlusses und/oder mittels eines Kraftschlusses zu einer Bearbeitung eines Werkstücks sichert, insbesondere zumindest teilweise mittels des Kraftschlussspannebenenelements der Spanneinheit. Der Ausdruck "Kraftschlussspannebenenelement" soll hier insbesondere ein Element definieren, das zumindest eine in einer Ebene verlaufende Spannfläche aufweist, die insbesondere größer ist als 0,1 cm², bevorzugt größer ist als 0,5 cm² und besonders bevorzugt größer ist als 1,5 cm², und das dazu vorgesehen ist, das Bearbeitungswerkzeug, insbesondere den Schaft des Bearbeitungswerkzeugs, mittels einer kraftschlüssigen Verbindung einzuspannen. Hierbei ist die Spannfläche des Kraftschlussspannebenenelements insbesondere differierend zu einer gekrümmten Spannfläche ausgebildet. Somit ist die Spannfläche vorzugsweise als Spannebene im mathematischen Sinne zu betrachten, wobei zu je zwei in der Spannebene liegenden Punkten auch eine durch diese Punkte verlaufende Gerade vollständig in der Spannebene liegt. Unter "vorgesehen" soll insbesondere speziell ausgelegt und/oder speziell ausgestattet verstanden werden.

Das Kraftschlussspannebenenelement ist vorzugsweise als Spannbacke ausgebildet, an der das Bearbeitungswerkzeug, insbesondere der Schaft des Bearbeitungswerkzeugs, in einer Spannposition des als Spannbacke ausgebildeten Kraftschlussspannebenenelements anliegt bzw. infolge einer Einspannkraft angedrück wird. Der Begriff "Spannposition" soll hier insbesondere eine Position des Kraftschlussspannebenenelements definieren, in der das Kraftschlussspannebenenelement an einer mit dem Kraftschlussspannebenenelement korrespondierenden Gegenspannfläche zu einer Erzeugung einer Spannkraft anliegt. Hierbei liegt das Kraftschlussspannebenenelement in einem in der Spanneinheit angeordneten Zustand des Bearbeitungswerkzeugs vorzugsweise an dem Bearbeitungswerkzeug, insbesondere dem Schaft des Bearbeitungswerkzeugs, an und übt somit zu einer Einspannung des Bearbeitungswerkzeugs eine Spannkraft auf das Bearbeitungswerkzeug, insbesondere den Schaft des Bearbeitungswerkzeugs, aus. Hierbei liegt das Kraftschlussspannebenenelement in einem in der Spanneinheit angeordneten Zustand des Bearbeitungswerkzeugs vorzugsweise an einer zumindest im Wesentlichen parallel zur Spannfläche des Kraftschlussspannebenenelements verlaufenden, sich in einer Ebene erstreckenden Außenfläche des Bearbeitungswerkzeugs, insbesondere des Schafts des Bearbeitungswerkzeugs, an. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Der Ausdruck "Betätigungselement" soll hier insbesondere ein Element definieren, das direkt von einem Bediener betätigbar ist, und das dazu vorgesehen ist, durch eine Betätigung und/oder durch eine Eingabe von Parametern einen Prozess und/oder einen Zustand zumindest eines weiteren Elements, das mit dem Element gekoppelt ist, zu beeinflussen und/oder zu ändern. Das Betätigungselement ist bevorzugt als Betätigungshülse ausgebildet. Es ist jedoch auch denkbar, dass das Betätigungselement eine andere, einem Fachmann als sinnvoll erscheinende Ausgestaltung aufweist, wie beispielsweise als Betätigungsknauf, als Betätigungshebel usw. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Besonders bevorzugt ist das Betätigungselement entlang zumindest zwei zumindest im Wesentlichen senkrecht zueinander verlaufenden Bewegungsrichtungen des Betätigungselements relativ zum Kraftschlussspannebenenelement beweglich gelagert. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung der Werkzeugmaschinenspannvorrichtung kann vorteilhaft eine Selbsthemmungsfunktion der Spanneinheit infolge der beweglichen Lagerung des Betätigungselements entlang der zumindest zwei zumindest im Wesentlichen quer zueinander verlaufenden Bewegungsrichtungen des Betätigungselements relativ zum Kraftschlussspannebenenelement erreicht werden, insbesondere bei zumindest einem von einer Spann- und/oder Löserichtung des Kraftschlussspannebenenelements differierenden Verlauf einer der zumindest zwei zumindest im Wesentlichen quer zueinander verlaufenden Bewegungsrichtungen des Betätigungselements. Somit kann vorteilhaft ein ungewolltes Lösen einer Spannkraft der Spanneinheit, insbesondere infolge einer starken Einwirkung einer Reaktionskraft während einer Bearbeitung eines Werkstücks mittels des in der Spanneinheit angeordneten Bearbeitungswerkzeugs, vorteilhaft verhindert werden.

Des Weiteren wird vorgeschlagen, dass das Betätigungselement zumindest einen Gewindebereich umfasst, mittels dessen das Betätigungselement relativ zum Kraftschlussspannebenenelement beweglich gelagert ist. Somit übt das Betätigungselement insbesondere während einer Betätigung eine translatorische Bewegung aus, die von einer rotatorischen Bewegung überlagert wird. Unter einem "Gewindebereich" soll hier insbesondere ein Bereich des Betätigungselements verstanden werden, in dem zumindest ein Gewindegang eines Gewindes, insbesondere eines Innengewindes, angeordnet ist. Der Gewindebereich des Betätigungselements wirkt bevorzugt mit einem korrespondierenden Gewindebereich eines Antriebskraftübertragungselements der Spanneinheit zusammen. Es ist jedoch auch denkbar, dass das Betätigungselement auf eine andere, einem Fachmann als sinnvoll erscheinende Art und Weise entlang der zumindest im Wesentlichen quer zueinander verlaufenden Bewegungsrichtungen relativ zum Kraftschlussspannebenenelement beweglich gelagert wird. Hierbei ist es beispielsweise denkbar, dass das Betätigungselement mittels eines Kurvengetriebes usw. relativ zum Kraftschlussspannebenenelement beweglich gelagert wird. Mittels eines Gewindebereichs des Betätigungselements kann vorteilhaft eine kostengünstige und zuverlässige bewegliche Lagerung des Betätigungselements entlang der zumindest zwei zumindest im Wesentlichen quer zueinander verlaufenden Bewegungsrichtungen des Betätigungselements realisiert werden. Zudem kann konstruktiv einfach eine Umsetzung einer Selbsthemmungsfunktion der Spanneinheit erreicht werden.

Ferner wird vorgeschlagen, dass die Spanneinheit zumindest ein Positionierelement aufweist, das zumindest eine zumindest im Wesentlichen quer zu einer Spannfläche des Kraftschlussspannebenenelements verlaufende Andrückfläche zu einer Einwirkung auf das Kraftschlussspannebenenelement aufweist. Der Begriff "Positionierelement" soll hier insbesondere ein Element, insbesondere ein beweglich gelagertes Element, definieren, das ein weiteres, beweglich gelagertes Element, insbesondere das Kraftschlussspannebenenelement, mittels einer Krafteinwirkung zumindest in einer Position hält bzw. zumindest eine Bewegung des weiteren Elements entlang zumindest einer Richtung weitestgehend verhindert. Das Positionierelement ist insbesondere translatorisch beweglich gelagert. Es ist jedoch auch denkbar, dass das Positionierelement entlang zumindest zwei zumindest im Wesentlichen quer zueinander verlaufenden Richtungen beweglich gelagert ist, insbesondere bei einer einstückigen Ausgestaltung des Positionierelements mit dem Betätigungselement. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Bevorzugt ist die Andrückfläche in einem montierten Zustand des Positionierelements relativ zur Spannfläche geneigt angeordnet. Die Andrückfläche ist vorzugsweise als Keilfläche ausgebildet. Somit kann konstruktiv einfach eine Kraftkomponente entlang einer Bewegungsachse des Positionierelements und eine zumindest im Wesentlichen quer zur Bewegungsachse des Positionierelements verlaufende weitere Kraftkomponente zu einer Positionierung des Kraftschlussspannebenenelements erzeugt werden.

Vorteilhafterweise weist das Kraftschlussspannebenenelement zumindest eine zumindest im Wesentlichen quer zur Spannfläche des Kraftschlussspannebenenelements verlaufende Spannpositionierfläche auf, die mit der Andrückfläche des Positionierelements korrespondierend ausgebildet ist. Vorzugsweise ist die Spannpositionierfläche relativ zur Spannfläche geneigt angeordnet. Bevorzugt ist die Spannpositionierfläche als Keilfläche ausgebildet. Somit wird vorzugsweise mittels eines Zusammenwirkens der Andrückfläche und der Spannpositionierfläche ein Keilmechanismus realisiert, der dazu vorgesehen ist, infolge einer Betätigung des Betätigungselements das Kraftschlussspannebenenelement über das Positionierelement in eine Spannposition zu bewegen. Es kann konstruktiv einfach eine zumindest im Wesentlichen quer zu einer Bewegungsrichtung des Positionierelements verlaufende Bewegung des Kraftschlussspannebenenelements zu einer Einspannung des Bearbeitungswerkzeugs erreicht werden.

Zudem wird vorgeschlagen, dass die Spanneinheit zumindest ein Positionierelement aufweist, das zumindest drehfest relativ zum Kraftschlussspannebenenelement angeordnet ist. Unter "drehfest angeordnet" soll hier insbesondere eine Anordnung eines Elements, insbesondere des Positionierelements, an einem weiteren Element, insbesondere am Kraftschlussspannebenenelement, verstanden werden, bei der eine Drehbewegung des Elements relativ zum einem weiteren Element zumindest weitestgehend unterbunden wird. Das Positionierelement ist bevorzugt mittels einer formschlüssigen Verbindung drehfest relativ zum Kraftschlussspannebenenelement angeordnet. Es ist jedoch auch denkbar, dass das Positionierelement mittels einer kraftschlüssigen Verbindung usw. drehfest relativ zum Kraftschlussspannebenenelement angeordnet ist. Mittels der erfindungsgemäßen Ausgestaltung kann konstruktiv einfach eine translatorisch bewegliche Lagerung des Positionierelements erreicht werden. Zudem kann vorteilhaft eine Führung des Positionierelements während einer Bewegung relativ zum Kraftschlussspannebenenelement durch das Kraftschlussspannebenenelement erreicht werden.

Vorteilhafterweise weist die Spanneinheit zumindest ein Positionierelement auf, das ringförmig ausgebildet ist. Es ist jedoch auch denkbar, dass das Positionierelement eine andere, einem Fachmann als sinnvoll erscheinende Ausgestaltung aufweist, wie beispielsweise eine rechteckförmige Ausgestaltung usw. Bevorzugt ist das Positionierelement als ringförmige Spannscheibe ausgebildet, die an einem Innendurchmesser des Positionierelements, betrachtet entlang einer Bewegungsachse des Positionierelements, zumindest eine relativ zu einer Außenfläche des Positionierelements geneigte Andrückfläche umfasst. Es kann vorteilhaft eine kompakte Spanneinheit realisiert werden.

Besonders bevorzugt weist die Spanneinheit zumindest ein Positionierelement auf, wobei das Betätigungselement zumindest eine Anlagefläche aufweist, an der das Positionierelement in zumindest einem Zustand anliegt. Es ist jedoch auch denkbar, dass das Positionierelement einstückig mit dem Betätigungselement ausgebildet ist. Hierbei ist das Betätigungselement bevorzugt relativ zum Positionierelement beweglich. Es kann konstruktiv einfach eine Bewegung des Positionierelements zu einer Positionierung des Kraftschlussspannebenenelements infolge einer Betätigung des Betätigungselements erreicht werden.

Des Weiteren wird vorgeschlagen, dass die Spanneinheit zumindest ein Federelement aufweist, das dazu vorgesehen ist, das Kraftschlussspannebenenelement zumindest entlang einer zumindest im Wesentlichen senkrecht zu einer Spannfläche des Kraftschlussspannebenenelements verlaufenden Richtung mit einer Federkraft zu beaufschlagen. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Bevorzugt ist das Federelement als Schraubenfeder ausgebildet. Es ist jedoch auch denkbar, dass das Federelement eine andere, einem Fachmann als sinnvoll erscheinende Ausgestaltung aufweist, wie beispielsweise eine Ausgestaltung als Evolutfeder, als Tellerfeder, als Schenkelfeder usw. Mittels der erfindungsgemäßen Ausgestaltung kann vorteilhaft eine Rückstellung des Kraftschlussspannebenenelements nach einem Lösen einer Positionierkraft des Positionierelements bzw. des Betätigungselements infolge der Federkraft erreicht werden.

Zudem wird vorgeschlagen, dass die Spanneinheit zumindest ein Formschlussfixierungselement aufweist, das dazu vorgesehen ist, zumindest in der Spannposition in das Bearbeitungswerkzeug einzugreifen. Das Formschlussfixierungselement ist bevorzugt als Fixierungsbolzen ausgebildet. Hierbei ist das Formschlussfixierungselement vorzugsweise in einer Ausnehmung des Kraftschlussspannebenenelements angeordnet. Es kann vorteilhaft eine sichere Fixierung, insbesondere eine formschlüssige Fixierung, des Bearbeitungswerkzeugs in einem in der Spanneinheit angeordneten Zustand des Bearbeitungswerkzeugs, insbesondere des Schafts des Bearbeitungswerkzeugs, erreicht werden.

Ferner geht die Erfindung aus von einer Werkzeugmaschine, insbesondere von einer tragbaren Werkzeugmaschine, die die erfindungsgemäße Werkzeugmaschinenspannvorrichtung umfasst. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt weist die tragbare Werkzeugmaschine zumindest eine Oszillationsantriebseinheit auf. Somit ist die tragbare Werkzeugmaschine vorzugsweise als Säbelsäge ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Stichsäge, als Tauchsäge, als Heckenschere, als Tigersäge usw. Mittels der erfindungsgemäßen Ausgestaltung der Werkzeugmaschine kann vorteilhaft ein hoher Bedienkomfort erreicht werden. Zudem kann vorteilhaft eine weitestgehend spielfreie Führung, insbesondere bei einem Bearbeiten von aus einer Wand oder dergleichen herausragenden Werkstücken, die entlang einer Ebene bearbeitet werden sollen, die zumindest im Wesentlichen bündig mit einer Wandoberfläche der Wand verläuft, gewährleistet werden. Somit kann vorteilhaft ein präzises Arbeitsergebnis gewährleistet werden.

Die erfindungsgemäße Werkzeugmaschinenspannvorrichtung und/oder die erfindungsgemäße Werkzeugmaschine sollen/soll hierbei nicht auf die oben beschriebene Anwendung und Ausführungsform beschränkt sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine in einer schematischen Darstellung,
- Fig. 2: eine Explosionsdarstellung einer erfindungsgemäßen Werkzeugmaschinenspannvorrichtung in einer schematischen Darstellung,
- Fig. 3: eine Schnittansicht der erfindungsgemäßen Werkzeugmaschinenspannvorrichtung entlang der Linie III-III aus Figur 2 in einer schematischen Darstellung,
- Fig. 4: eine zu Figur 3 analoge Schnittansicht einer alternativen erfindungsgemäßen Werkzeugmaschinenspannvorrichtung in einer schematischen Darstellung,
- Fig. 5: eine Explosionsdarstellung einer weiteren, alternativen erfindungsgemäßen Werkzeugmaschinenspannvorrichtung in einer schematischen Darstellung,
- Fig. 6: eine Schnittansicht der weiteren, alternativen erfindungsgemäßen Werkzeugmaschinenspannvorrichtung entlang der Linie VI-VI aus Figur 5 in einer schematischen Darstellung und
- Fig. 7: eine zu Figur 6 analoge Schnittansicht einer weiteren, alternativen erfindungsgemäßen Werkzeugmaschinenspannvorrichtung in einer schematischen Darstellung.

### Beschreibung der Ausführungsbeispiele

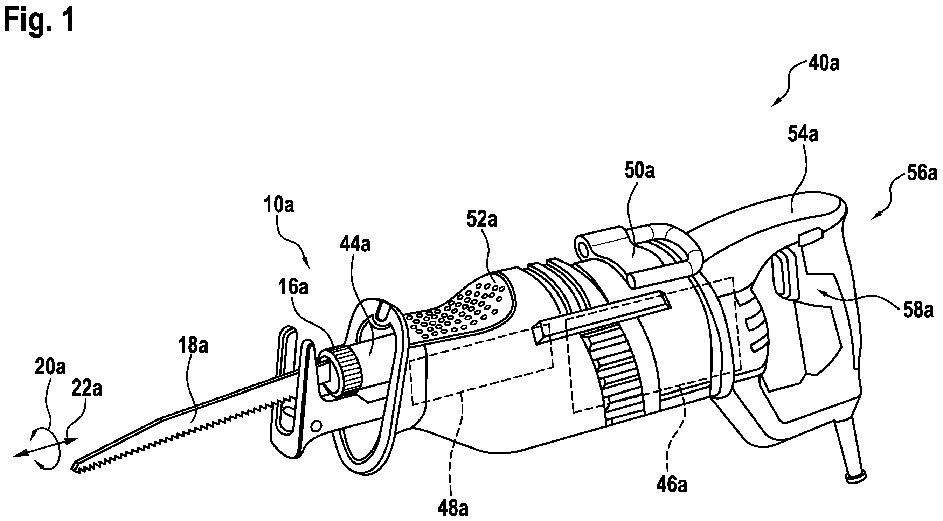

Figur 1 zeigt eine als Säbelsäge ausgebildete Werkzeugmaschine 40a. Somit ist die Werkzeugmaschine 40a als tragbare Werkzeugmaschine ausgebildet. Die Werkzeugmaschine 40a umfasst hierbei eine Werkzeugmaschinenspannvorrichtung 10a zu einer Kopplung zumindest eines Bearbeitungswerkzeugs 18a mit der Werkzeugmaschine 40a. Das Bearbeitungswerkzeug 18a ist als Sägeblatt ausgebildet. Hierbei umfasst das Bearbeitungswerkzeug 18a einen Schaft 42a, mit dem das Bearbeitungswerkzeug 18a zumindest teilweise in eine Spanneinheit 12a der Werkzeugmaschinenspannvorrichtung 10a einführbar ist. Die Spanneinheit 12a weist hierbei ein Antriebskraftübertragungselement 44a auf, das dazu vorgesehen ist, eine mittels der Werkzeugmaschine 40a erzeugte Antriebskraft auf das Bearbeitungswerkzeug 18a in einem in der Spanneinheit 12a eingespannten Zustand des Bearbeitungswerkzeugs 18a zu übertragen. Das Antriebskraftübertragungselement 44a ist als Hubstange ausgebildet.

Zu einer Erzeugung einer Antriebskraft umfasst die Werkzeugmaschine 40a eine Antriebseinheit 46a und eine Abtriebseinheit 48a. Die Antriebseinheit 46a und die Abtriebseinheit 48a sind dazu vorgesehen, in einem in der Werkzeugmaschinenspannvorrichtung 10a eingespannten und fixierten Zustand des Bearbeitungswerkzeugs 18a das Bearbeitungswerkzeug 18a zu einer Bearbeitung eines Werkstücks (hier nicht näher dargestellt) mittels der Werkzeugmaschine 40a translatorisch anzutreiben. Die Werkzeugmaschine 40a weist zudem zumindest ein Antriebsgehäuse 50a und ein Abtriebsgehäuse 52a auf. Das Antriebsgehäuse 50a ist dazu vorgesehen, die Antriebseinheit 46a zu lagern. Das Abtriebsgehäuse 52a ist dazu vorgesehen, die Abtriebseinheit 48a zu lagern. Ferner weist die Werkzeugmaschine 40a ein Handgriffgehäuse 54a auf, das mittels einer formschlüssigen und/oder einer kraftschlüssigen Verbindung an dem Antriebsgehäuse 50a angeordnet ist. Hierbei kann die Werkzeugmaschine 40a eine Dämpfungseinheit (hier nicht näher dargestellt) umfassen, die dazu vorgesehen ist, das Handgriffgehäuse 54a schwingungstechnisch weitestgehend von dem Antriebsgehäuse 50a zu isolieren. Das Handgriffgehäuse 54a umfasst hierbei einen D-förmigen Griffbereich 56a, an dem eine Schalteinheit 58a zu einer Deaktivierung und/oder zu einer Inbetriebnahme der Werkzeugmaschine 40a zumindest teilweise angeordnet ist. Ferner weist das Handgriffgehäuse 54a eine Schalenbauweise auf. Es ist jedoch auch denkbar, dass das Handgriffgehäuse 54a eine andere, einem Fachmann als sinnvoll erscheinende Ausgestaltung aufweist, wie beispielsweise eine Topfbauweise oder eine Kombination aus einer Schalenbauweise und einer Topfbauweise.

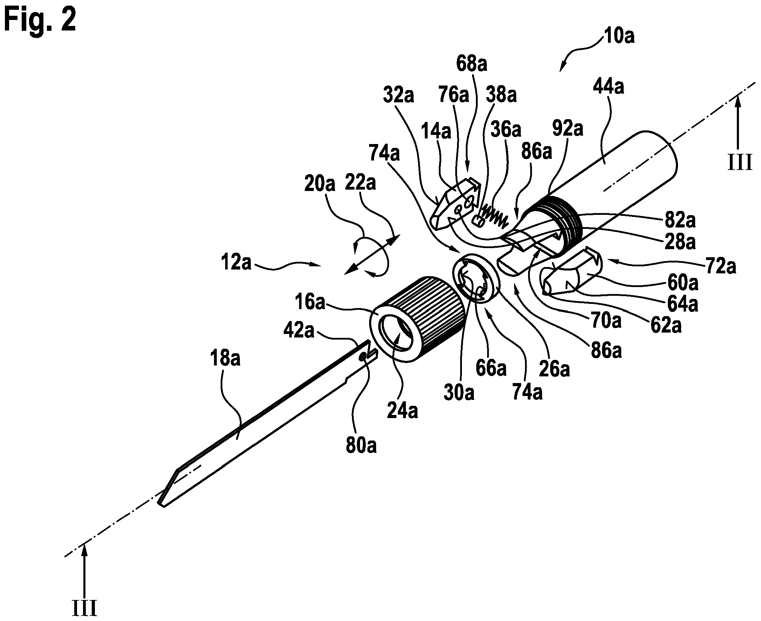

Figur 2 zeigt eine Explosionsdarstellung der Werkzeugmaschinenspannvorrichtung 10a in einem von der Werkzeugmaschine 40a demontierten Zustand. Die Werkzeugmaschinenspannvorrichtung 10a umfasst die Spanneinheit 12a, die zumindest ein beweglich gelagertes Kraftschlussspannebenenelement 14a und zumindest ein Betätigungselement 16a aufweist, das dazu vorgesehen ist, das Kraftschlussspannebenenelement 14a zu einer Einspannung des Bearbeitungswerkzeugs 18a zumindest in eine Spannposition zu bewegen. Das Betätigungselement 16a ist in einem montierten Zustand entlang zumindest zwei zumindest im Wesentlichen quer zueinander verlaufenden Bewegungsrichtungen 20a, 22a des Betätigungselements 16a relativ zum Kraftschlussspannebenenelement 14a beweglich gelagert. Hierzu umfasst das Betätigungselement 16a zumindest einen Gewindebereich 24a, mittels dessen das Betätigungselement 16a relativ zum Kraftschlussspannebenenelement 14a beweglich gelagert ist. Der Gewindebereich 24a wird von einem Innengewinde des Betätigungselements 16a gebildet. Das Antriebskraftübertragungselement 44a weist hierbei an einem dem Betätigungselement 16a zugewandten Bereich ein mit dem Gewindebereich 24a korrespondierend ausgebildetes Außengewinde 92a auf. Das Betätigungselement 16a ist mittels eines Zusammenwirkens des Gewindebereichs 24a des Betätigungselements 16a und des Außengewindes 92a des Antriebskraftübertragungselements 44a translatorisch entlang einer Bewegungsachse des Betätigungselements 16a und rotatorisch um die Bewegungsachse relativ zum Kraftschlussspannebenenelement 14a beweglich gelagert. Das Betätigungselement 16a übt hierdurch während einer Betätigung eine translatorische Bewegung aus, die von einer rotatorischen Bewegung überlagert wird. Somit übt das Betätigungselement 16a während einer Betätigung eine Schraubbewegung relativ zum Kraftschlussspannebenenelement 14a aus.

Des Weiteren weist die Spanneinheit 12a zumindest ein Positionierelement 26a auf, das zumindest eine zumindest im Wesentlichen quer zu einer Spannfläche 28a des Kraftschlussspannebenenelements 14a verlaufende Andrückfläche 30a zu einer Einwirkung auf das Kraftschlussspannebenenelement 14a aufweist. Hierbei weist das Kraftschlussspannebenenelement 14a ebenfalls zumindest eine zumindest im Wesentlichen quer zur Spannfläche 28a des Kraftschlussspannebenenelements 14a verlaufende Spannpositionierfläche 32a auf, die mit der Andrückfläche 30a des Positionierelements 26a korrespondierend ausgebildet ist. Die Spannpositionierfläche 32a ist auf einer der Spannfläche 28a abgewandten Seite des Kraftschlussspannebenenelements 14a angeordnet. Die Andrückfläche 30a und die Spannpositionierfläche 32a des Kraftschlussspannebenenelements 14a bilden zusammen einen Keilmechanismus, mittels dessen das Kraftschlussspannebenenelement 14a infolge einer zumindest im Wesentlichen parallel zur Spannfläche 28a verlaufenden Bewegung des Positionierelements 26a in eine zumindest im Wesentlichen senkrecht zur Spannfläche 28a verlaufende Richtung bewegbar ist. Somit ist die Andrückfläche 30a als Keilfläche ausgebildet. Die Spannpositionierfläche 32a ist als korrespondierende Keilfläche ausgebildet. Das Positionierelement 26a ist infolge einer Betätigung des Betätigungselements 16a entlang der zumindest im Wesentlichen parallel zur Spannfläche 28a des Kraftschlussspannebenenelements 14a translatorische relativ zum Kraftschlussspannebenenelement 14a beweglich. Hierbei weist das Betätigungselement 16a zumindest eine Anlagefläche 34a auf, an der das Positionierelement 26a in zumindest einem Zustand anliegt. Somit wird das Positionierelement 26a infolge eines Anliegens an der Anlagefläche 34a mittels des Betätigungselements 16a translatorisch bewegt sobald das Betätigungselement 16a betätigt wird.

Die Spanneinheit 12a weist zudem ein weiteres Kraftschlussspannebenenelement 60a auf, das eine zumindest im Wesentlichen analoge Ausgestaltung zum Kraftschlussspannebenenelement 14a aufweist. Somit weist das weitere Kraftschlussspannebenenelement 60a eine weitere Spannfläche 62a und eine weitere Spannpositionierfläche 64a auf. Die weitere Spannfläche 62a ist dazu vorgesehen, mittels eines Zusammenwirkens mit der Spannfläche 28a des Kraftschlussspannebenenelements 14a das Bearbeitungswerkzeug 18a kraftschlüssig einzuspannen. Hierzu werden das Kraftschlussspannebenenelement 14a und das weitere Kraftschlussspannebenenelement 60a durch eine translatorische Bewegung des Positionierelements 26a entlang einer zumindest im Wesentlichen parallel zur Spannfläche 28a verlaufenden Richtung entlang einer zumindest im Wesentlichen senkrecht zu der Spannfläche 28a und zu der weiteren Spannfläche 62a verlaufenden Richtung aufeinander zu bewegt. Hierbei gleitet die Spannpositionierfläche 32a auf der Andrückfläche 30a und die weitere Spannpositionierfläche 64a gleitet auf einer weiteren Andrückfläche 66a des Positionierelements 26a. Die Andrückfläche 30a und die weitere Andrückfläche 66a des Positionierelements 26a sind, betrachtet entlang einer sich in einer zumindest im Wesentlichen senkrecht zur Spannfläche 28a verlaufenden Ebene erstreckenden Umfangsrichtung des Positionierelements 26a, relativ zueinander versetzt am Positionierelement 26a angeordnet. Hierbei können die Andrückfläche 30a, die weitere Andrückfläche 66a, die Spannpositionierfläche 32a und die weitere Spannpositionierfläche 64a mit einer reibungsmindernden Beschichtung versehen sein.

Zu einer weitestgehenden Verhinderung einer Drehbewegung des Positionierelements 26a relativ zum Kraftschlussspannebenenelement 14a und relativ zum weiteren Kraftschlussspannebenenelement 60a infolge einer Drehbewegung des Betätigungselement 16a zu einer Bewegung des Kraftschlussspannebenenelements 14a und des weiteren Kraftschlussspannebenenelements 60a ist das Positionierelement 26a zumindest drehfest relativ zum Kraftschlussspannebenen-element 14a angeordnet. Hierzu weist das Positionierelement 26a Formschlussbereiche 74a auf, die korrespondierend mit Drehfixierungsbereichen 86a des Antriebskraftübertragungselements 44a ausgebildet sind und die dazu vorgesehen sind, entlang einer Rotationsrichtung des Betätigungselements 16a einen Formschluss zwischen dem Positionierelement 26a und den Drehfixierungsbereichen 86a des Antriebskraftübertragungselements 44a zu erzeugen. Somit ist das Positionierelement 26a ebenfalls drehfest relativ zum weiteren Kraftschlussspannebenenelement 60a angeordnet. Das Positionierelement 26a ist ringförmig ausgebildet. Somit umgreift das Positionierelement 26a das Kraftschlussspannebenenelement 14a und das weitere Kraftschlussspannebenenelement 60a entlang der Rotationsrichtung des Betätigungselements 16a.

Das Kraftschlussspannebenenelement 14a ist translatorisch entlang der zumindest im Wesentlichen senkrecht zur Spannfläche 28a verlaufenden Richtung beweglich im Antriebskraftübertragungselement 44a gelagert. Hierbei weist das Kraftschlussspannebenenelement 14a zumindest einen Führungsbereich 68a auf. Der Führungsbereich 68a ist korrespondierend mit einem Führungsaufnahmebereich 70a des Antriebskraftübertragungselements 44a ausgebildet. Der Führungsbereich 68a und der Führungsaufnahmebereich 70a bilden zusammen eine Schwalbenschwanzführung. Es ist jedoch auch denkbar, dass der Führungsbereich 68a und der Führungsaufnahmebereich 70a zusammen eine andere, einem Fachmann als sinnvoll erscheinende Ausgestaltung einer Führung bilden, wie beispielsweise eine Profilschienenführung, eine Käfigschienenführung, eine Teleskopschienenführung usw. Zudem ist das weitere Kraftschlussspannebenenelement 60a translatorisch entlang einer zumindest im Wesentlichen senkrecht zur weiteren Spannfläche 62a beweglich im Antriebskraftübertragungselement 44a gelagert. Hierzu weist das weitere Kraftschlussspannebenenelement 60a ebenfalls einen korrespondierend mit dem Führungsaufnahmebereich 70a des Antriebskraftübertragungselements 44a ausgebildeten weiteren Führungsbereich 72a auf.

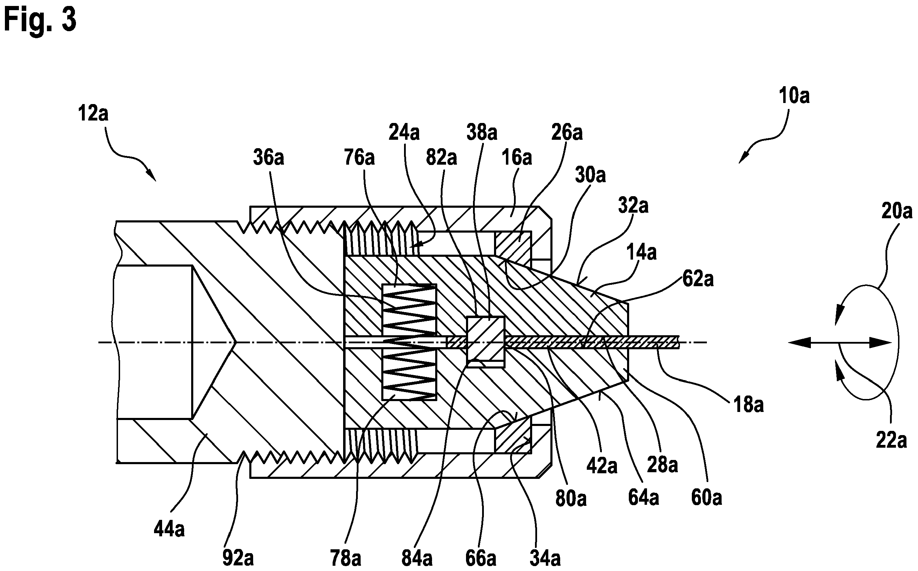

Des Weiteren weist die Spanneinheit 12a zumindest ein Federelement 36a auf, das dazu vorgesehen ist, das Kraftschlussspannebenenelement 14a zumindest entlang der zumindest im Wesentlichen senkrecht zur Spannfläche 28a des Kraftschlussspannebenenelements 14a verlaufenden Richtung mit einer Federkraft zu beaufschlagen. Das Kraftschlussspannebenenelement 14a weist hierbei eine Federelementaufnahmeausnehmung 76a auf, in der das Federelement 36a in einem montierten Zustand zumindest teilweise angeordnet ist. Zudem weist das weitere Kraftschlussspannebenenelement 60a eine weitere Federelementaufnahmeausnehmung 78a auf, in der das Federelement 36a in einem montierten Zustand zumindest teilweise angeordnet ist (Figur 3). Somit stützt sich das Federelement 36a mit einem Ende am Kraftschlussspannebenenelement 14a ab und mit einem weiteren Ende stützt sich das Federelement 36a an dem weiteren Kraftschlussspannebenenelement 60a ab. Das Federelement 36a ist dazu vorgesehen, bei einem Lösen einer Einspannkraft infolge einer Betätigung des Betätigungselements 16a das Kraftschlussspannebenenelement 14a und das weitere Kraftschlussspannebenenelement 60a in entgegengesetzte Richtungen zu bewegen.

Ferner weist die Spanneinheit 12a zumindest ein Formschlussfixierungselement 38a auf, das dazu vorgesehen ist, zumindest in der Spannposition in das Bearbeitungswerkzeug 18a einzugreifen. Das Bearbeitungswerkzeug 18a weist hierbei eine Formschlussausnehmung 80a auf, in die das Formschlussfixierungselement 38a zumindest in der Spannposition in das Bearbeitungswerkzeug 18a eingreift. Das Formschlussfixierungselement 38a ist als Fixierungsbolzen ausgebildet. Hierbei ist das Formschlussfixierungselement 38a mittels einer Presspassung kraftschlüssig in einer Fixierungsausnehmung 82a des Kraftschlussspannebenenelements 14a fixiert. Das Formschlussfixierungselement 38a erstreckt sich in einem montierten Zustand zumindest im Wesentlichen senkrecht zur Spannfläche 28a des Kraftschlussspannebenenelements 14a über die Spannfläche 28a hinaus (Figur 3). Das weitere Kraftschlussspannebenenelement 60a weist hierbei eine Aufnahmeausnehmung 84a, die dazu vorgesehen ist, das Formschlussfixierungselement 38a zumindest in der Spannposition infolge eines Eingreifens in das Bearbeitungswerkzeug 18a zumindest teilweise aufzunehmen.

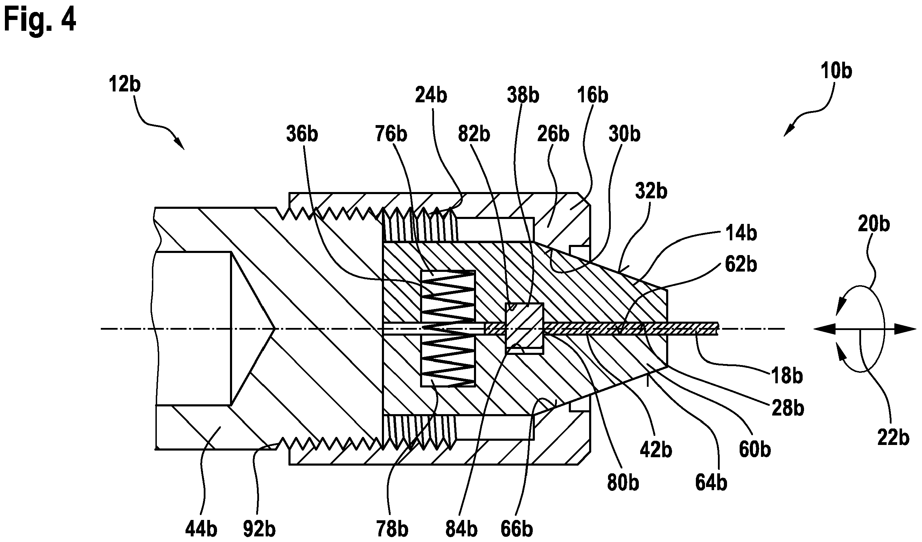

In Figuren 4 bis 7 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis d hinzugefügt. Die nachfolgende Beschreibung beschränkt sich im Wesentlichen auf die Unterschiede zu dem ersten Ausführungsbeispiel in den Figuren 1 bis 3, wobei bezüglich gleichbleibender Bauteile, Merkmale und Funktionen auf die Beschreibung des ersten Ausführungsbeispiels in den Figuren 1 bis 3 verwiesen werden kann.

Figur 4 zeigt eine zu Figur 3 analoge Schnittansicht einer alternativen Werkzeugmaschinenspannvorrichtung 10b. Die Werkzeugmaschinenspannvorrichtung 10b umfasst zumindest eine Spanneinheit 12b, die zumindest ein beweglich gelagertes Kraftschlussspannebenenelement 14b und zumindest ein Betätigungselement 16b aufweist, das dazu vorgesehen ist, das Kraftschlussspannebenenelement 14b zu einer Einspannung eines Bearbeitungswerkzeugs 18b zumindest in eine Spannposition zu bewegen. Das Betätigungselement 16b ist entlang zumindest zwei zumindest im Wesentlichen quer zueinander verlaufenden Bewegungsrichtungen 20b, 22b des Betätigungselements 16b relativ zum Kraftschlussspannebenenelement 14b beweglich gelagert. Des Weiteren umfasst die Spanneinheit 12b ein Positionierelement 26b, das einstückig mit dem Betätigungselement 16b ausgebildet ist. Hinsichtlich weiterer Merkmale und Funktionen der Spanneinheit 12b kann auf die in den Figuren 1 bis 3 beschriebene Spanneinheit 12a verwiesen werden.

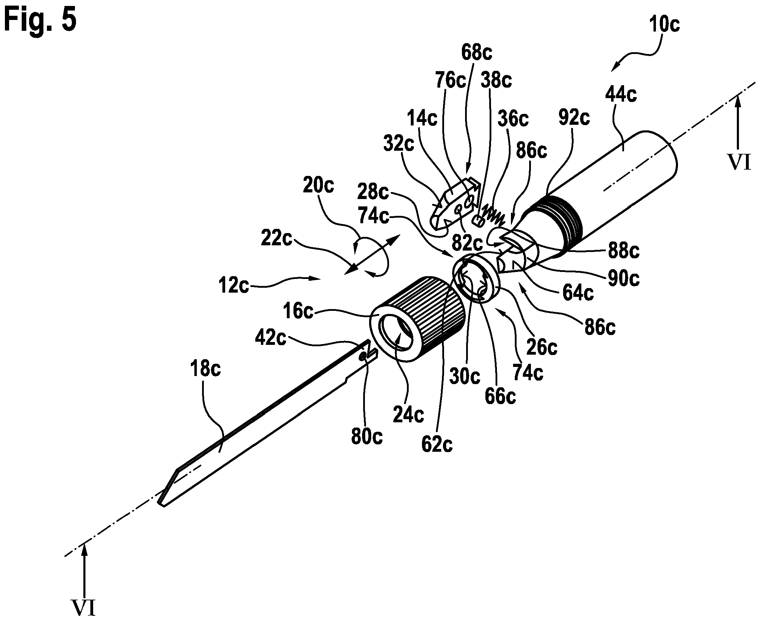

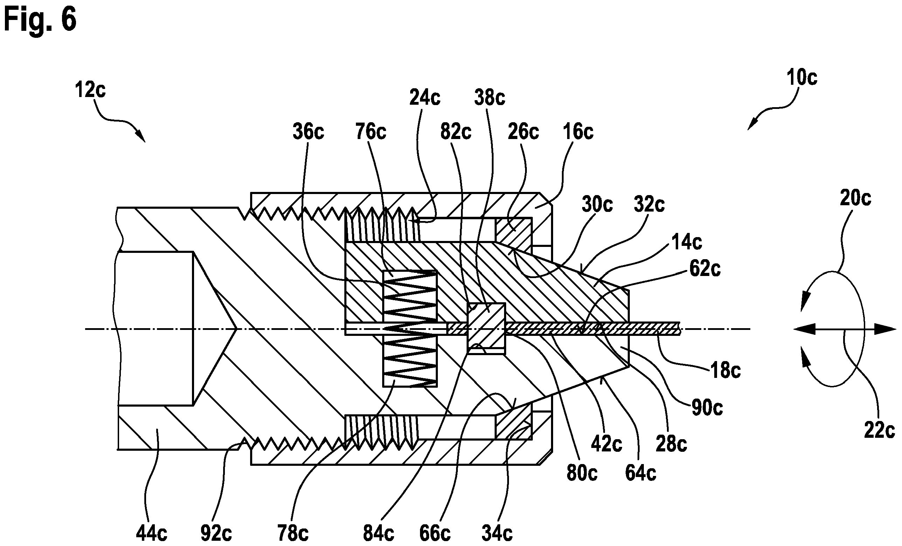

Figur 5 zeigt eine Explosionsdarstellung einer weiteren, alternativen Werkzeugmaschinenspannvorrichtung 10c in einem von einer Werkzeugmaschine (hier nicht näher dargestellt) demontierten Zustand. Die Werkzeugmaschinenspannvorrichtung 10c umfasst eine Spanneinheit 12c, die zumindest ein beweglich gelagertes Kraftschlussspannebenenelement 14c und zumindest ein Betätigungselement 16c aufweist, das dazu vorgesehen ist, das Kraftschlussspannebenenelement 14c zu einer Einspannung des Bearbeitungswerkzeugs 18c zumindest in eine Spannposition zu bewegen. Das Betätigungselement 16c ist in einem montierten Zustand entlang zumindest zwei zumindest im Wesentlichen quer zueinander verlaufenden Bewegungsrichtungen 20c, 22c des Betätigungselements 16c relativ zum Kraftschlussspannebenenelement 14c beweglich gelagert. Das Kraftschlussspannebenenelement 14c ist translatorisch entlang einer zumindest im Wesentlichen senkrecht zu einer Spannfläche 28c des Kraftschlussspannebenenelements 14c in einer Lagerausnehmung 88c eines Antriebskraftübertragungselements 44c der Spanneinheit 12c gelagert. Hierbei weist das Kraftschlussspannebenenelement 14c zumindest einen Führungsbereich 68c auf. Der Führungsbereich 68c ist korrespondierend mit einem Führungsaufnahmebereich 70c des Antriebskraftübertragungselements 44c ausgebildet. Der Führungsbereich 68c und der Führungsaufnahmebereich 70c bilden zusammen eine Schwalbenschwanzführung. Es ist jedoch auch denkbar, dass der Führungsbereich 68c und der Führungsaufnahmebereich 70c zusammen eine andere, einem Fachmann als sinnvoll erscheinende Ausgestaltung einer Führung bilden, wie beispielsweise eine Profilschienenführung, eine Käfigschienenführung, eine Teleskopschienenführung usw. Somit bildet ein Kraftschlussspannebenenbereich 90c des Antriebskraftübertragungselements 44c eine weitere Spannfläche 62c, die mittels eines Zusammenwirkens mit der Spannfläche 28c des Kraftschlussspannebenenelements 14c eine kraftschlüssige Einspannung des in der Spanneinheit 12c angeordneten Bearbeitungswerkzeugs 18c ermöglicht (Figur 6). Hinsichtlich weiterer Merkmale und Funktionen der Spanneinheit 12c kann auf die in den Figuren 1 bis 3 beschriebene Spanneinheit 12a verwiesen werden.

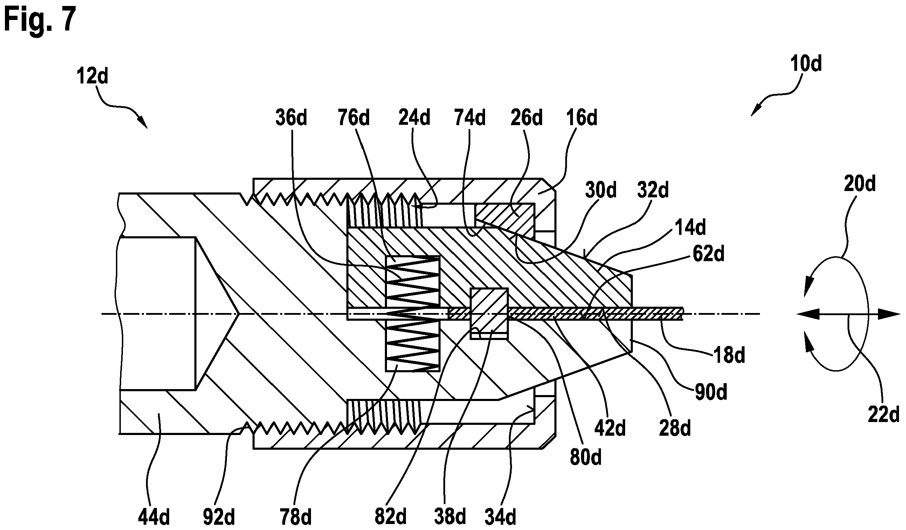

Figur 7 zeigt eine zu Figur 3 analoge Schnittansicht einer weiteren, alternativen Werkzeugmaschinenspannvorrichtung 10d. Die Werkzeugmaschinenspannvorrichtung 10d umfasst zumindest eine Spanneinheit 12d, die zumindest ein beweglich gelagertes Kraftschlussspannebenenelement 14d und zumindest ein Betätigungselement 16d aufweist, das dazu vorgesehen ist, das Kraftschlussspannebenenelement 14d zu einer Einspannung eines Bearbeitungswerkzeugs 18d zumindest in eine Spannposition zu bewegen. Das Betätigungselement 16d ist entlang zumindest zwei zumindest im Wesentlichen quer zueinander verlaufenden Bewegungsrichtungen 20d, 22d des Betätigungselements 16d relativ zum Kraftschlussspannebenenelement 14d beweglich gelagert. Das Kraftschlussspannebenenelement 14d ist translatorisch entlang einer zumindest im Wesentlichen senkrecht zu einer Spannfläche 28d des Kraftschlussspannebenenelements 14d in einer Lagerausnehmung 88d eines Antriebskraftübertragungselements 44d der Spanneinheit 12d gelagert. Somit kann bezüglich einer Anordnung des Kraftschlussspannebenenelements 14d auf eine in den Figuren 5 und 6 beschriebene Anordnung des Kraftschlussspannebenenelements 14c und eine in den Figuren 5 und 6 beschriebene Ausgestaltung des Antriebskraftübertragungselements 44d verwiesen werden.

Des Weiteren umfasst die Spanneinheit 12d zumindest ein Positionierelement 26d das drehfest relativ zum Kraftschlussspannebenenelement 14d angeordnet ist. Hierzu weist das Positionierelement 26d Formschlussbereiche 74d auf, die korrespondierend mit einer Außenform des zum Kraftschlussspannebenenelements 14d oder korrespondierend mit einem Drehfixierungsbereich (hier nicht näher dargestellt) des Antriebskraftübertragungselements 44d ausgebildet sind und die dazu vorgesehen sind, entlang einer Rotationsrichtung des Betätigungselements 16d einen Formschluss zwischen dem Positionierelement 26d und dem Kraftschlussspannebenenelement 14d zu erzeugen. Das Positionierelement 26d weist hierbei eine zumindest im Wesentlichen quaderförmige Ausgestaltung auf. Hinsichtlich weiterer Merkmale und Funktionen der Spanneinheit 12d kann auf die in den Figuren 1 bis 3 beschriebene Spanneinheit 12a verwiesen werden.

## Patentansprüche

1. Werkzeugmaschinenspannvorrichtung, insbesondere Oszillationswerkzeugmaschinenspannvorrichtung, mit zumindest einer Spanneinheit (12a; 12c; 12d), die zumindest ein beweglich gelagertes Kraftschlussspannebenenelement (14a; 14c; 14d) und zumindest ein Betätigungselement (16a; 16c; 16d) aufweist, das dazu vorgesehen ist, das Kraftschlussspannebenenelement (14a; 14c; 14d) zu einer Einspannung eines Bearbeitungswerkzeugs (18a; 18c; 18d) zumindest in eine Spannposition zu bewegen, wobei das Betätigungselement (16a; 16c; 16d) entlang zumindest zwei zumindest im Wesentlichen quer zueinander verlaufenden Bewegungsrichtungen (20a, 22a; 20c, 22c; 20d, 22d) des Betätigungselements (16a; 16c; 16d) relativ zum Kraftschlussspannebenenelement (14a; 14c; 14d) beweglich gelagert ist, wobei die Spanneinheit (12a; 12c; 12d) zumindest ein Positionierelement (26a; 26c; 26d) aufweist, das zumindest eine zumindest im Wesentlichen quer zu einer Spannfläche (28a; 28c; 28d) des Kraftschlussspannebenenelements (14a; 14c; 14d) verlaufende Andrückfläche (30a; 30c; 30d) zu einer Einwirkung auf das Kraftschlussspannebenenelement (14a; 14c; 14d) aufweist, **dadurch gekennzeichnet, dass** das Positionierelement (26a; 26c; 26d) zumindest drehfest relativ zum Kraftschlussspannebenenelement (14a; 14c; 14d) angeordnet ist.

2. Werkzeugmaschinenspannvorrichtung nach Anspruch 1, **dadurch gekennzeichnet, dass** das Betätigungselement (16a; 16c; 16d) zumindest einen Gewindebereich (24a; 24c; 24d) umfasst, mittels dessen das Betätigungselement (16a; 16c; 16d) relativ zum Kraftschlussspannebenenelement (14a; 14c; 14d) beweglich gelagert ist.

3. Werkzeugmaschinenspannvorrichtung nach Anspruch 1 oder 2, **dadurch gekennzeichnet, dass** das Kraftschlussspannebenenelement (14a; 14c; 14d) zumindest eine zumindest im Wesentlichen quer zur Spannfläche (28a; 28c; 28d) des Kraftschlussspannebenenelements (14a; 14c; 14d) verlaufende Spannpositionierfläche (32a; 32c; 32d) aufweist, die mit der Andrückfläche (30a; 30c; 30d) des Positionierelements (26a; 26c; 26d) korrespondierend ausgebildet ist.

4. Werkzeugmaschinenspannvorrichtung nach einem der vorhergehenden Ansprüche, **dadurch gekennzeichnet, dass** die Spanneinheit (12a; 12c) zumindest ein Positionierelement (26a; 26c) aufweist, das ringförmig ausgebildet ist.

5. Werkzeugmaschinenspannvorrichtung nach einem der vorhergehenden Ansprüche, **dadurch gekennzeichnet, dass** die Spanneinheit (12a; 12c; 12d) zumindest ein Positionierelement (26a; 26c; 26d) aufweist, wobei das Betätigungselement (16a; 16c; 16d) zumindest eine Anlagefläche (34a; 34c; 34d) aufweist, an der das Positionierelement (26a; 26c; 26d) in zumindest einem Zustand anliegt.

6. Werkzeugmaschinenspannvorrichtung nach einem der vorhergehenden Ansprüche, **dadurch gekennzeichnet, dass** die Spanneinheit (12a; 12c; 12d) zumindest ein Federelement (36a; 36c; 36d) aufweist, das dazu vorgesehen ist, das Kraftschlussspannebenenelement (14a; 14c; 14d) zumindest entlang einer zumindest im Wesentlichen senkrecht zu einer Spannfläche (28a; 28c; 28d) des Kraftschlussspannebenenelements (14a; 14c; 14d) verlaufenden Richtung mit einer Federkraft zu beaufschlagen.

7. Werkzeugmaschinenspannvorrichtung nach einem der vorhergehenden Ansprüche, **dadurch gekennzeichnet, dass** die Spanneinheit (12a; 12c; 12d) zumindest ein Formschlussfixierungselement (38a; 38c; 38d) aufweist, das dazu vorgesehen ist, zumindest in der Spannposition in das Bearbeitungswerkzeug (18a; 18c; 18d) einzugreifen.

8. Werkzeugmaschine, insbesondere Säbelsäge, mit zumindest einer Werkzeugmaschinenspannvorrichtung nach einem der vorhergehenden Ansprüche.

## Claims

1. Power tool clamping device, in particular oscillation power tool clamping device, comprising at least one clamping unit (12a; 12c; 12d), which has at least one movably mounted force-fit clamping plane element (14a; 14c; 14d) and has at least one actuating element (16a; 16c; 16d) provided to move the force-fit clamping plane element (14a; 14c; 14d) for the purpose of clamping a working tool (18a; 18c; 18d) at least in a clamping position, wherein the actuating element (16a; 16c; 16d) is mounted so as to be movable relative to the force-fit clamping plane element (14a; 14c; 14d) along at least two at least substantially mutually transverse movement directions (20a, 22a; 20c, 22c; 20d, 22d) of the actuating element (16a; 16c; 16d), wherein the clamping unit (12a; 12c; 12d) has at least one positioning element (26a; 26c; 26d), which has at least one pressing face (30a; 30c; 30d), extending at least substantially transversely in relation to a clamping face (28a; 28c; 28d) of the force-fit clamping plane element (14a; 14c; 14d), for acting upon the force-fit clamping plane element (14a; 14c; 14d), **characterized in that** the positioning element (26a; 26c; 26d) is disposed so as to be at least rotationally fixed relative to the force-fit clamping plane element (14a; 14c; 14d).

2. Power tool clamping device according to Claim 1, **characterized in that** the actuating element (16a; 16c; 16d) comprises at least one threaded region (24a; 24c; 24d), by means of which the actuating element (16a; 16c; 16d) is mounted so as to be movable relative to the force-fit clamping plane element (14a; 14c; 14d).

3. Power tool clamping device according to Claim 1 or 2, **characterized in that** the force-fit clamping plane element (14a; 14c; 14d) has at least one clamping positioning face (32a; 32c; 32d), which extends at least substantially transversely in relation to the clamping face (28a; 28c; 28d) of the force-fit clamping plane element (14a; 14c; 14d), and which is realized so as to correspond with the pressing face (30a; 30c; 30d) of the positioning element (26a; 26c; 26d).

4. Power tool clamping device according to any one of the preceding claims, **characterized in that** the clamping unit (12a; 12c) has at least one positioning element (26a; 26c) that is annular in form.

5. Power tool clamping device according to any one of the preceding claims, **characterized in that** the clamping unit (12a; 12c; 12d) has at least one positioning element (26a; 26c; 26d), wherein the actuating element (16a; 16c; 16d) has at least one bearing contact face (34a; 34c; 34d) against which the positioning element (26a; 26c; 26d) bears in at least one state.

6. Power tool clamping device according to any one of the preceding claims, **characterized in that** the clamping unit (12a; 12c; 12d) has at least one spring element (36a; 36c; 36d), which is provided to apply a spring force to the force-fit clamping plane element (14a; 14c; 14d), at least along a direction at least substantially perpendicular to a clamping face (28a; 28c; 28d) of the force-fit clamping plane element (14a; 14c; 14d).

7. Power tool clamping device according to any one of the preceding claims, **characterized in that** the clamping unit (12a; 12c; 12d) has at least one form-fit fixing element (38a; 38c; 38d), which is provided to engage in the working tool (18a; 18c; 18d), at least in the clamping position.

8. Power tool, in particular saber saw, comprising at least one power tool clamping device according to any one of the preceding claims.

## Revendications

1. Dispositif de serrage pour machine-outil, en particulier dispositif de serrage pour machine-outil à oscillation, avec au moins une unité de serrage (12a; 12c; 12d), qui présente au moins un élément plan de serrage par force (14a; 14c; 14d) et au moins un élément d'actionnement (16a; 16c; 16d), qui est prévu pour déplacer l'élément plan de serrage par force (14a; 14c; 14d) au moins dans une position de serrage pour un serrage d'un outil d'usinage (18a; 18c; 18d), dans lequel l'élément d'actionnement (16a; 16c; 16d) est monté de façon mobile le long d'au moins deux directions de mouvement (20a, 22a; 20c, 22c; 20d, 22d) de l'élément d'actionnement (16a; 16c; 16d) orientées au moins essentiellement transversalement l'une à l'autre par rapport à l'élément plan de serrage par force (14a; 14c; 14d), dans lequel l'unité de serrage (12a; 12c; 12d) présente au moins un élément de positionnement (26a; 26c; 26d), qui présente au moins une face de pression (30a; 30c; 30d) s'étendant au moins essentiellement transversalement à une face de serrage (28a; 28c; 28d) de l'élément plan de serrage par force (14a; 14c; 14d) en vue d'une action sur l'élément plan de serrage par force (14a; 14c; 14d), **caractérisé en ce que** l'élément de positionnement (26a; 26c; 26d) est disposé au moins sans rotation par rapport à l'élément plan de serrage par force (14a; 14c; 14d).

2. Dispositif de serrage pour machine-outil selon la revendication 1, **caractérisé en ce que** l'élément d'actionnement (16a; 16c; 16d) comprend au moins une région filetée (24a; 24c; 24d), au moyen de laquelle l'élément d'actionnement (16a; 16c; 16d) est monté de façon mobile par rapport à l'élément plan de serrage par force (14a; 14c; 14d).

3. Dispositif de serrage pour machine-outil selon la revendication 1 ou 2, **caractérisé en ce que** l'élément plan de serrage par force (14a; 14c; 14d) présente au moins une face de positionnement de serrage (32a; 32c; 32d) s'étendant au moins essentiellement transversalement à la face de serrage (28a; 28c; 28d) de l'élément plan de serrage par force (14a; 14c; 14d), et qui est réalisée de façon correspondante à la face de pression (30a; 30c; 30d) de l'élément de positionnement (26a; 26c; 26d).

4. Dispositif de serrage pour machine-outil selon l'une quelconque des revendications précédentes, **caractérisé en ce que** l'unité de serrage (12a; 12c; 12d) présente au moins un élément de positionnement (26a; 26c), qui est de forme annulaire.

5. Dispositif de serrage pour machine-outil selon l'une quelconque des revendications précédentes, **caractérisé en ce que** l'unité de serrage (12a; 12c; 12d) présente au moins un élément de positionnement (26a; 26c; 26d), dans lequel l'élément d'actionnement ((16a; 16c; 16d) présente au moins une face d'appui (34a; 34c; 34d), sur laquelle l'élément de positionnement (26a; 26c; 26d) s'applique dans au moins un état.

6. Dispositif de serrage pour machine-outil selon l'une quelconque des revendications précédentes, **caractérisé en ce que** l'unité de serrage (12a; 12c; 12d) présente au moins un élément de ressort (36a; 36c; 36d), qui est prévu pour exercer une force de ressort sur l'élément plan de serrage par force (14a; 14c; 14d) au moins le long d'une direction s'étendant au moins essentiellement perpendiculairement à une face de serrage (28a; 28c; 28d) de l'élément plan de serrage par force (14a; 14c; 14d).

7. Dispositif de serrage pour machine-outil selon l'une quelconque des revendications précédentes, **caractérisé en ce que** l'unité de serrage (12a; 12c; 12d) présente au moins un élément de fixation par emboîtement (38a; 38c; 38d), qui est prévu pour agir dans l'outil d'usinage (18a; 18c; 18d) au moins dans la position de serrage.

8. Machine-outil, en particulier scie sabre, avec au moins un dispositif de serrage pour machine-outil selon l'une quelconque des revendications précédentes.
